# EUROPÄISCHE PATENTANMELDUNG

(11) **EP 1 873 089 A2**
(43) Veröffentlichungstag der Anmeldung: **02.01.2008**
(21) Anmeldenummer: 07110445.9
(22) Anmeldetag: 18.06.2007
(51) Int. Cl.: B65G 47/14

(54) **Charakterisierungssystem für Gegenstände und Verfahren zur Zuführung von Gegenständen zu einer Charakterisierungseinrichtung**

(30) Priorität: 30.06.2006 DE 102006031577
(71) Anmelder: Bizerba GmbH & Co. KG, 72336 Balingen (DE)
(72) Erfinder: Beck, Bruno, 72406 Bisingen (DE); Conzelmann, Dieter, 72458 Albstadt (DE); Gaiser, Armin, 72474 Benzingen (DE); Kammerer, Gerd, 78658 Zimmern o. R. (DE); Kraft, Martin, 72356 Dautmergen (DE)
(74) Vertreter: Hoeger, Stellrecht & Partner Patentanwälte

(57) **Zusammenfassung**

Es wird ein Charakterisierungssystem für Gegenstände bereitgestellt, umfassend mindestens eine Charakterisierungseinrichtung für die Gegenstände, eine Förderbandeinrichtung zur Zuführung von Gegenständen zu der mindestens einen Charakterisierungseinrichtung, welche mindestens einen Bereich mit einem ersten Förderbandabschnitt und mit einem zweiten Förderbandabschnitt umfasst, wobei der erste Förderbandabschnitt und der zweite Förderbandabschnitt parallel nebeneinander liegen und zur Bereitstellung einer rinnenförmigen Förderbahn mit V-Stellung des ersten Förderbandabschnitts und des zweiten Förderbandabschnitts in einem Neigungswinkel zu einer Horizontalebene positionierbar sind, und eine Antriebseinrichtung für den ersten Förderbandabschnitt und den zweiten Förderbandabschnitt zur Einstellung von definierten Winkelpositionen.

## Beschreibung

Die Erfindung betrifft ein Charakterisierungssystem für Gegenstände, umfassend mindestens eine Charakterisierungseinrichtung für die Gegenstände und eine Förderbandeinrichtung zur Zuführung von Gegenständen zu der mindestens einen Charakterisierungseinrichtung.

Die Erfindung betrifft weiterhin ein Verfahren zur Zuführung von Gegenständen zu einer Charakterisierungseinrichtung mittels einer Förderbandeinrichtung.

Die mindestens eine Charakterisierungseinrichtung charakterisiert die Gegenstände, indem sie eine oder mehrere Eigenschaften eines Gegenstands ermittelt und/oder einen Gegenstand mit einem Kennzeichen versieht, d.h. insbesondere eine oder mehrere Eigenschaften eines Gegenstands an dem Gegenstand ablesbar positioniert.

An einem Etikettiersystem werden Gegenstände dadurch charakterisiert, dass Etiketten mit Gegenstandsinformationen an den Gegenständen fixiert werden. Ein solches Etikettiersystem kann auch als weitere Charakterisierungseinrichtung eine Wägeeinrichtung umfassen, durch welche das Gewicht eines individuellen Gegenstandes ermittelbar ist. Auf einem Etikett kann dann das Gewicht des Gegenstands und gegebenenfalls der Preis des Gegenstands, wenn der Preis pro Gewichtseinheit bekannt ist, abgedruckt werden.

Aus der JP 10-279034 A ist ein Förderer bekannt, welcher ein Paar von Rahmen umfasst, die derart angeordnet sind, dass zwischen beiden ein Zwischenraum in der Form eines V gebildet ist.

Aus der JP 2003-285910 A ist eine Trägervorrichtung und ein Gewichtsinspektionssystem bekannt. Ein flaches Band weist dabei geneigte Bereiche auf.

Aus der DE 196 09 431 A1 ist ein Verfahren zum Wägen und Etikettieren von Warenpackungen bekannt, bei dem jede Packung einer elektronischen Waage zugeführt wird, die mit einer einen Rechner enthaltenden elektronischen Auswerteschaltung verbunden ist, durch welche das Packungsgewicht bestimmt und der zugeordnete Preis berechnet wird. Die Packung wird auf der Waage weitergefördert und nach dem Wägevorgang einem durch den Rechner gesteuerten Etikettiersystem zugeführt, durch welches ein Etikett bedruckt und auf die Packung aufgebracht wird. Danach wird die Packung abgeführt. Die Packung wird auf der Waage mindestens während des Wägevorgangs mit einer Geschwindigkeit weitergefördert, die kleiner ist als die Zuführgeschwindigkeit und die Abführgeschwindigkeit. Das Aufbringen des Etiketts nach Beendigung des Wägevorgangs erfolgt auf der Waage selbst, wobei Störungen der Waage aufgrund von Erschütterung durch das Fördern und Etikettieren einerseits durch eine ausreichend große träge Masse zwischen Waage und Packung und andererseits durch ein in der Auswerteschaltung angeordnetes Tiefpassfilter eliminiert werden.

Aus der FR 2 725 704 A1 ist eine Maschine zum Entkörnen von Objekten bekannt, welche einen Entkörner-Förderer umfasst, welcher zwei geneigte Bereiche umfasst, die Seite an Seite angeordnet sind und ein V bilden.

Der Erfindung liegt die Aufgabe zugrunde, ein Charakterisierungssystem der genannten Art bereitzustellen, welches auf einfache Weise betreibbar ist.

Diese Aufgabe wird erfindungsgemäß dadurch gelöst, dass eine Förderbandeinrichtung zur Zuführung von Gegenständen zu der mindestens einen Charakterisierungseinrichtung vorgesehen ist, welche mindestens einen Bereich mit einem ersten Förderbandabschnitt und mit einem zweiten Förderbandabschnitt umfasst, wobei der erste Förderbandabschnitt und der zweite Förderbandabschnitt parallel nebeneinander liegen und zur Bereitstellung einer rinnenförmigen Förderbahn mit V-Stellung des ersten Förderbandabschnitts und des zweiten Förderbandabschnitts in einem Neigungswinkel zu einer Horizontalebene positionierbar sind, und eine Antriebseinrichtung für den ersten Förderbandabschnitt und den zweiten Förderbandabschnitt zur Einstellung von definierten Winkelpositionen vorhanden ist.

Durch die Einstellung einer definierten Winkelposition des ersten Förderbandabschnitts und des zweiten Förderbandabschnitts wird eine rinnenförmige Förderbahn bereitgestellt, wobei die Förderbandabschnitte in V-Form angeordnet sind. Dadurch lässt sich eine definierte "Zentrierung" von zu charakterisierenden Gegenständen erreichen. Dadurch wiederum wird sichergestellt, dass die zu charakterisierenden Gegenstände in einer definierten Bahn der mindestens einen Charakterisierungseinrichtung zugeführt werden. Dies stellt sicher, dass die Charakterisierungseinrichtung auf die zu charakterisierenden Gegenstände zugreifen kann. Beispielsweise ist dadurch sichergestellt, dass ein Etikett an der richtigen Stelle des Gegenstands ablegbar ist.

Durch die "Zentrierung" über die V-Anordnung der Förderbandabschnitte lassen sich hohe Charakterisierungsraten und beispielsweise hohe Etikettierraten erreichen. Beispielsweise lassen sich dadurch auch Gewichtsdaten für die zu charakterisierenden Gegenstände auf einfache und schnelle Weise ermitteln.

Der Neigungswinkel ist abhängig von der Produktgröße; für größere Produkte ist ein kleinerer Neigungswinkel erforderlich und für kleinere Produkte ist ein größerer Neigungswinkel (bezogen auf die Horizontalebene) erforderlich, um eine optimierte Produktzentrierung zu erhalten.

Durch die erfindungsgemäße Antriebseinrichtung lässt sich der Neigungswinkel insbesondere automatisch angepasst an die jeweiligen Gegenstände (und insbesondere Kategorie von Gegenständen) einstellen. Dadurch ist das Charakterisierungssystem auf einfache Weise an unterschiedliche Gegenstandskategorien anpassbar. Die Einstellung (welche üblicherweise nicht während des Betriebs des Charakterisierungssystems erfolgt, sondern vor Betrieb) lässt sich auf einfache und schnelle Weise mit minimalem Eingriffsaufwand durchführen. Dadurch lassen sich auch die Stillstandszeiten minimieren, wenn für eine andere Kategorie von Gegenständen eine Neueinstellung notwendig ist.

Die entsprechenden Produktdaten, auf denen die Einstellung basiert, können zuvor über eine Sensoreinrichtung ermittelt worden sein oder können bereits in einer Produktdatenbank abgespeichert sein. Dadurch ist eine einfache Ansteuerbarkeit zur Einstellung des erforderlichen Neigungswinkels des ersten Förderbandabschnitts und des zweiten Förderbandabschnitts ermöglicht.

Insbesondere ist es günstig, wenn eine Steuerungseinrichtung vorhanden ist, durch welche die Antriebseinrichtung in Abhängigkeit von Produktdaten der Gegenstände zur definierten Einstellung der Winkelposition ansteuerbar ist. Dadurch lässt sich sicherstellen, dass die entsprechenden Gegenstände (welche zu einer bestimmten Kategorie gehören) richtig "zentriert" werden, um sie der mindestens einen Charakterisierungseinrichtung optimiert zuführen zu können.

Günstigerweise sind die Produktdaten, auf deren Grundlage die Winkelpositionen eingestellt werden, Geometriedaten. Diese Geometriedaten bestimmen dann den Neigungswinkel des ersten Förderbandabschnitts und des zweiten Förderbandabschnitts, um eine optimierte Charakterisierung durch die mindestens eine Charakterisierungseinrichtung zu erhalten.

Es kann eine Sensoreinrichtung zur Ermittlung der Produktdaten, auf deren Grundlage die Winkelpositionen eingestellt werden, vorhanden sein. Die Sensoreinrichtung ermittelt dann vor dem eigentlichen Betrieb des Charakterisierungssystems die notwendigen Produktdaten. Die Sensoreinrichtung kann beispielsweise einen Strichcodescanner umfassen, über welchen Barcodes auf den Gegenständen lesbar sind. Die Sensoreinrichtung kann auch eine Kamera und eine Auswertungseinrichtung umfassen, über welche beispielsweise die Größe und Form von Gegenständen insbesondere kategorieweise erfassbar sind.

Ganz besonders vorteilhaft ist es, wenn eine Produktdatenbank für Produktdaten, auf deren Grundlage die Winkelpositionen eingestellt werden, vorhanden ist. In dieser Produktdatenbank sind die notwendigen Daten gespeichert. Es kann dann auf einfache und schnelle Weise durch entsprechendes Auslesen dieser Produktdaten die richtige Einstellung erfolgen.

Ganz besonders vorteilhaft ist es, wenn die Antriebseinrichtung so ausgebildet und so angesteuert ist, dass definierte Winkelpositionen automatisch einstellbar sind. Beispielsweise gibt ein Bediener die Produktkategorie vor. Die Steuerungseinrichtung liest dann aus einer Produktdatenbank die entsprechenden Produktdaten aus, auf deren Grundlage dann die definierte Winkelposition an der Förderbandeinrichtung eingestellt wird. Dadurch wird eine rinnenförmige Förderbahn bereitgestellt, welche für die entsprechende Produktkategorie optimiert ist.

Bei einer Ausführungsform weist die Antriebseinrichtung pro Förderbandabschnitt mindestens einen Stellzylinder auf. Über einen Stellzylinder lässt sich auf einfache Weise die entsprechende Winkelposition einstellen. Je nach Länge des Förderbandabschnitts können mehrere Stellzylinder vorgesehen sein.

Bei einer Ausführungsform ist der mindestens eine Stellzylinder elektromotorisch betätigt. Beispielsweise ist ein Elektrozylinder vorgesehen. Ein solcher Stellzylinder lässt sich auf einfache Weise ansteuern. Es lassen sich grundsätzlich zumindest innerhalb eines Bereiches beliebige Winkelpositionen einstellen.

Es kann auch vorgesehen sein, dass der mindestens eine Stellzylinder pneumatisch oder hydraulisch betätigt ist. Wenn beispielsweise das Charakterisierungssystem bereits eine pneumatische Einheit (beispielsweise als Teil einer Etikettiereinrichtung) umfasst, dann lässt sich auf einfache Weise eine pneumatische Winkeleinstellung erreichen.

Günstig ist es, wenn der mindestens eine Stellzylinder an dem entsprechenden Förderbandabschnitt und an einem Gestell angelenkt ist. Dadurch kann auf einfache Weise eine Winkeleinstellung erfolgen. Wenn der Stellzylinder eine verfahrbare Spindel aufweist, dann kann durch den Hub der Spindel der Winkel definiert eingestellt werden.

Bei einer Ausführungsform erfolgt eine Einstellung einer definierten Winkelposition eines Förderbandabschnitts ausgehend von einer Referenzposition. Dadurch lässt sich das System auf einfache Weise kalibrieren. Insbesondere wird vor der Einstellung die Referenzposition eingefahren. Der Überwachungsaufwand lässt sich dadurch relativ gering halten.

Insbesondere ist die Referenzposition eine Horizontalposition, bei der der erste Förderbandabschnitt und der zweite Förderbandabschnitt parallel zur Horizontalebene ausgerichtet sind.

Bei einer Ausführungsform steuert die Steuerungseinrichtung durch Hochzählen von Pulsen ausgehend von einer Referenzposition die Antriebseinrichtung zur Einstellung einer definierten Winkelposition an. Dadurch lässt sich auf einfache Weise eine definierte Winkeleinstellung erreichen. Es handelt sich dabei um eine Relativeinstellung, für die keine absolute Positionsbestimmung notwendig ist.

Bei einer alternativen Ausführungsform steuert die Steuerungseinrichtung die Einstellung einer definierten Winkelposition absolut. Dazu wird ein Winkel vorgegeben, wobei die Winkelposition absolut eingefahren wird. Es ist dazu ein absoluter Positionsgeber notwendig.

Insbesondere ist eine synchrone Ansteuerung von unterschiedlichen Antriebsuntereinheiten der Antriebseinrichtung vorgesehen. Dazu ist insbesondere eine synchrone Ansteuerung von Antriebsuntereinheiten vorgesehen, welche dem ersten Förderbandabschnitt und dem zweiten Förderbandabschnitt zugeordnet sind. Wenn das Charakterisierungssystem unterschiedliche Bereiche umfasst, welche getrennt in ihrer Winkelposition eingestellt werden müssen, dann ist ebenfalls vorteilhafterweise eine synchrone Ansteuerung aller Antriebsuntereinheiten vorgesehen.

Ganz besonders vorteilhaft ist es, wenn der erste Förderbandabschnitt und der zweite Förderbandabschnitt sich gegeneinander abstützen und/oder an einem Gestell abgestützt sind. Dadurch lässt sich eine steife Förderbandeinrichtung auch bei einer Winkelposition realisieren.

Bei einer Ausführungsform ist die Antriebseinrichtung so ausgebildet, dass Winkelpositionen stufenlos einstellbar sind. Dadurch erhält man eine hohe Variationsbreite bezüglich der Anpassung der rinnenförmigen Förderbahn.

Bei einer alternativen Ausführungsform ist die Antriebseinrichtung so ausgebildet, dass diskrete Winkelpositionen einstellbar sind. Beispielsweise sind dazu pneumatische Stellzylinder vorgesehen. Das entsprechende Charakterisierungssystem lässt sich auf einfache Weise ausbilden.

Günstig ist es, wenn ein Förderband des ersten/zweiten Förderbandabschnitts durch einen Antrieb angetrieben ist, welcher an dem ersten Förderbandabschnitt/zweiten Förderbandabschnitt positioniert ist. Dadurch ist der Aufwand, welcher zur Drehmomentübertragung von dem Antrieb auf das Förderband notwendig ist, gering gehalten.

Bei einer Ausführungsform ist eine Wägeeinrichtung als Charakterisierungseinrichtung vorgesehen. Die Gegenstände werden durch die Wägeeinrichtung geführt, wobei Gewichtsdaten ermittelt werden.

Bei einem Etikettierungssystem ist eine Etikettiereinrichtung als Charakterisierungseinrichtung vorgesehen. Es kann dabei eine Wägeeinrichtung vorgeschaltet sein. Die Etikettiereinrichtung legt ein Etikett mit aufgedruckten Produktdaten an den entsprechenden Gegenständen ab.

Günstig ist es, wenn die Etikettiereinrichtung relativ zu der Förderbandeinrichtung beweglich ist. Dadurch lässt sich bei der Vorbereitung von Etikettiervorgängen die Etikettiereinrichtung bezüglich der Förderbandeinrichtung so positionieren, dass ein optimiertes Etikettierergebnis erreicht ist und insbesondere eine hohe Etikettierrate erreicht ist, das heißt ein hoher Produktdurchsatz erreicht ist. Die Position der Etikettiereinrichtung ist dabei insbesondere abhängig von der Winkelposition des ersten Förderbandabschnitts und des zweiten Förderbandabschnitts.

Beispielsweise weist die Etikettiereinrichtung einen Etikettierkopf auf, welcher in mindestens einer Richtung quer zu einer Transportrichtung der Förderbandeinrichtung verschieblich ist. Dadurch lässt sich dieser in einer optimierten Stellung an der Förderbandeinrichtung positionieren, um ein optimiertes Etikettierergebnis zu erhalten.

Es kann auch vorgesehen sein, dass die Etikettiereinrichtung einen Etikettierkopf aufweist, welcher um mindestens eine Schwenkachse schwenkbar ist. Dadurch ist einstellbar, in welchen Ausrichtungen ein Etikett an einem Gegenstand ablegbar ist. Der Schwenkbereich beträgt beispielsweise 90°, 180° oder 270°. Die Schwenkbewegung ist beispielsweise pneumatisch oder elektromotorisch angetrieben. Durch die Schwenkbarkeit lassen sich beispielsweise Schmucketiketten mit vorgedrucktem Logo (wie Firmenlogo) definiert an einer gewünschten Position wie einer Stirnseite eines Gegenstands ablegen. Die Schwenkbarkeit kann auch ohne Winkel-Einstellbarkeit der Förderbandabschnitte realisiert sein.

Insbesondere ist die mindestens eine Schwenkachse quer zu einer Transportrichtung der Förderbandeinrichtung orientiert, um die Orientierung von abgelegten Etiketten einstellen zu können.

Günstigerweise ist dabei die mindestens eine Schwenkachse eine vertikale Achse, das heißt eine Achse, welche mindestens näherungsweise parallel zur Schwerkraftrichtung orientiert ist.

Es kann vorgesehen sein, dass die Förderbandeinrichtung eine Mehrzahl von Bereichen aufweist, welche jeweils einen ersten Förderbandabschnitt und einen zweiten Förderbandabschnitt aufweisen. Unterschiedliche Bereiche haben unterschiedliche Funktionen. Beispielsweise kann ein Wägebereich vorgesehen sein und ein nachfolgender Etikettierbereich, wobei in dem Wägebereich ermittelte Gewichtsdaten beim Bedrucken von abzulegenden Etiketten verwendet werden.

Bei einem Ausführungsbeispiel weist die Förderbandeinrichtung einen Zuführungsbereich auf. Über den Zuführungsbereich werden Gegenstände eingekoppelt.

Bei einem weiteren Ausführungsbeispiel weist die Förderbandeinrichtung einen Vereinzelungsbereich auf. Der Vereinzelungsbereich dient dazu, Gegenstände zu vereinzeln, so dass diese einzeln einem Wägebereich und/oder einem Etikettierbereich zugeführt werden.

Insbesondere im Zusammenhang mit einem Etikettierungssystem weist die Förderbandeinrichtung einen Wägebereich auf. In diesem Wägebereich werden Gewichtsdaten von einzelnen Gegenständen ermittelt, wobei diese Gewichtsdaten dann für die Etikettierung verwendet werden. Beispielsweise wird ausgehend von einem Preis pro Gewichtseinheit der Gesamtpreis für einen vorher gewogenen Gegenstand ermittelt.

Insbesondere weist die Förderbandeinrichtung einen Etikettierbereich auf, an welchem eine Etikettenablegung erfolgt.

Günstig ist es, wenn die Winkelpositionen der ersten Förderbandabschnitte und der zweiten Förderbandabschnitte in den unterschiedlichen Bereichen durch eine Steuerungseinrichtung synchronisierbar sind. Dadurch lässt sich eine insbesondere automatische Einstellung des gleichen Neigungswinkels in allen Bereichen erreichen.

Es ist günstig, wenn der Förderbandeinrichtung mindestens eine Sicherheitswand zugeordnet ist. Dadurch lässt sich eine Zugänglichkeit der Förderbandeinrichtung insbesondere während der Verstellung des Neigungswinkels sperren.

Ganz besonders vorteilhaft ist es, wenn dem ersten Förderbandabschnitt und dem zweiten Förderbandabschnitt jeweils mindestens ein Positionsgeber zugeordnet ist. Wenn Stellzylinder vorgesehen sind, dann ist insbesondere jedem Stellzylinder ein eigener Positionsgeber zugeordnet. Es lässt sich dann die Verstellung des ersten Förderbandabschnitts und des zweiten Förderbandabschnitts in dem jeweiligen Neigungswinkel überwachen und auftretende Fehler lassen sich früher erkennen.

Der Erfindung liegt ferner die Aufgabe zugrunde, ein Verfahren der eingangs genannten Art bereitzustellen, mittels welchem sich eine einfache und schnelle Charakterisierung der Gegenstände erreichen lässt.

Diese Aufgabe wird erfindungsgemäß dadurch gelöst, dass eine Winkeleinstellung eines ersten Förderbandabschnitts und eines zweiten Förderbandabschnitts der Förderbandeinrichtung zu einer Horizontalebene über eine Antriebseinrichtung in Abhängigkeit von Produktdaten der Gegenstände automatisch erfolgt.

Das erfindungsgemäße Verfahren weist die bereits im Zusammenhang mit dem erfindungsgemäßen Charakterisierungssystem erläuterten Vorteile auf.

Weitere vorteilhafte Ausführungsformen des erfindungsgemäßen Verfahrens wurden ebenfalls bereits im Zusammenhang mit dem erfindungsgemäßen Charakterisierungssystem erläutert.

Insbesondere sind die Produktdaten Geometriedaten. Dadurch lässt sich in Abhängigkeit von der Geometrie der Gegenstände eine optimierte Einstellung der Förderbandeinrichtung erreichen.

Insbesondere wird der Winkel zur Horizontalebene größer eingestellt, wenn die Gegenstände kleinere geometrische Abmessungen aufweisen. Dadurch lassen sich die kleineren Gegenstände optimiert zentrieren, um sie in einer definierten Positionierung der Charakterisierungseinrichtung zuführen zu können.

Insbesondere werden die Produktdaten aus einer Produktdatenbank entnommen und/oder von einer Sensoreinrichtung ermittelt, um auf einfache Weise eine automatische Winkeleinstellung zu erhalten.

Günstig ist es, wenn die Einstellung einer definierten Winkelposition ausgehend von einer Referenzposition erfolgt. Dadurch lässt sich mit minimiertem Steuerungsaufwand eine Winkeleinstellung durchführen. Die Referenzposition wird vor Einstellung der definierten Winkelposition zunächst angefahren.

Insbesondere ist die Referenzposition eine Horizontalposition. Diese lässt sich auf einfache Weise definieren. Beispielsweise weist ein Zylindergehäuse einen entsprechenden Anlagebereich auf, durch welchen die Referenzposition als Horizontalposition festgelegt ist.

Die nachfolgende Beschreibung bevorzugter Ausführungsformen dient im Zusammenhang mit der Zeichnung der näheren Erläuterung der Erfindung. Es zeigen:
- Figur 1: eine schematische Blockbilddarstellung eines Ausführungsbeispiels eines erfindungsgemäßen Charakterisierungssystems;
- Figur 2: eine perspektivische Darstellung eines Ausführungsbeispiels eines erfindungsgemäßen Charakterisierungssystems;
- Figur 3: einen Ausschnitt einer Förderbandeinrichtung des Charakterisierungssystems gemäß Figur 2 mit waagerechter Stellung eines ersten Förderbandabschnitts und eines zweiten Förderbandabschnitts; und
- Figur 4: die gleiche Ansicht wie Figur 3 mit einer Winkelstellung des ersten Förderbandabschnitts und des zweiten Förderbandabschnitts zu einer Horizontalebene.

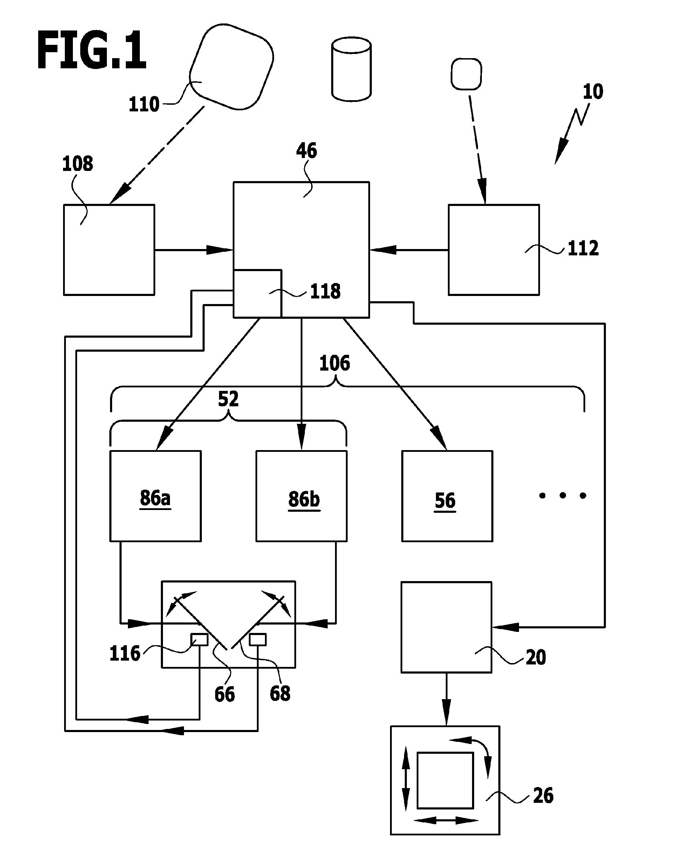

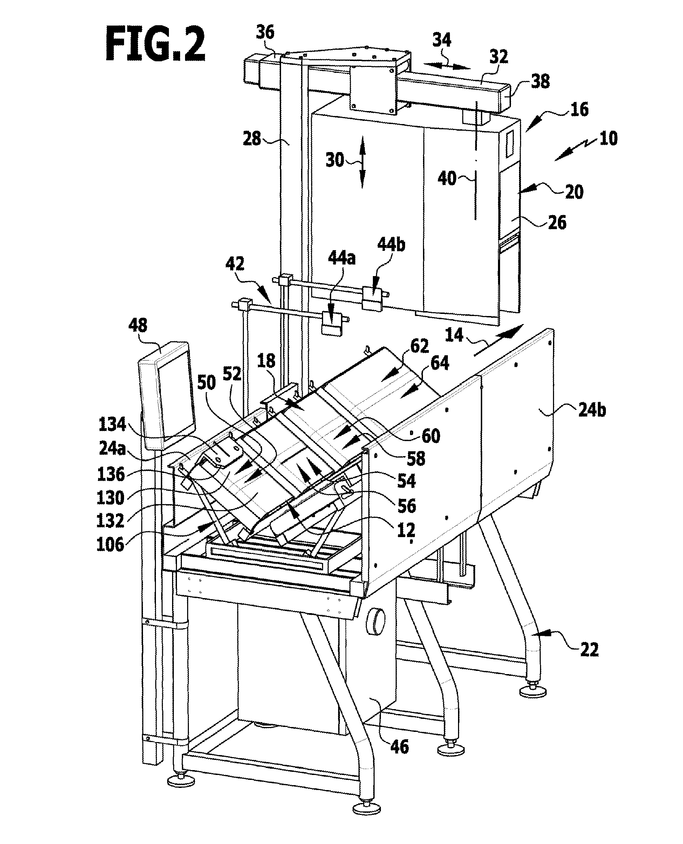

Ein Ausführungsbeispiel eines erfindungsgemäßen Charakterisierungssystems, welches in Figur 1 schematisch in Blockbilddarstellung gezeigt und dort mit 10 bezeichnet ist und in Figur 2 perspektivisch dargestellt ist, umfasst eine Förderbandeinrichtung 12, mittels welcher Gegenstände in einer Transportrichtung 14 einer oder mehreren Charakterisierungseinrichtungen 16 für die Gegenstände zuführbar sind.

Bei dem gezeigten Ausführungsbeispiel ist eine Wägeeinrichtung 18 als Charakterisierungseinrichtung vorgesehen. Ferner ist eine Etikettiereinrichtung 20 als Charakterisierungseinrichtung vorgesehen.

Das Charakterisierungssystem 10 umfasst ein Gestell 22, an welchem die Förderbandeinrichtung 12 angeordnet ist. An dem Gestell 22 ist die Förderbandeinrichtung 12 abgestützt.

Die Förderbandeinrichtung 12 ist dabei zwischen gegenüberliegenden Sicherheitswänden 24a, 24b positioniert. Die Sicherheitswände 24a, 24b sind insbesondere feststellbar schwenkbar an dem Gestell 22 angeordnet. Sie können beispielsweise zur Reinigung der Förderbandeinrichtung 12 heruntergeschwenkt werden. Bei der in Figur 2 gezeigten Darstellung sind sie im Wesentlichen vertikal orientiert.

Die Etikettiereinrichtung 20 umfasst einen Etikettierkopf 26. Dieser ist beispielsweise an einer Säule 28 angeordnet, welche fest mit dem Gestell 22 verbunden ist. Die Säule 28 ragt über die Förderbandeinrichtung 12 insbesondere in vertikaler Richtung hinaus.

Der Etikettierkopf 26 ist an der Säule 28 feststellbar verschieblich gelagert. Die Verschiebungsbewegung ist in einer Richtung/Gegenrichtung 30 zugelassen, welche quer und insbesondere senkrecht zur Transportrichtung 14 orientiert ist. Die Richtung 30 ist insbesondere eine vertikale Richtung.

An oder in der Nähe eines oberen Endes der Säule 28 ist eine Querführung 32 angeordnet. An dieser Querführung ist der Etikettierkopf 26 in einer Richtung/Gegenrichtung 34 feststellbar verschieblich positioniert, wobei die Richtung 34 quer und insbesondere senkrecht zur Transportrichtung 14 ist. Zur Betätigung der Verschiebungsbewegung ist ein Antrieb 36 vorgesehen, bei welchem es sich insbesondere um einen Elektromotor handelt.

Der Etikettierkopf 26 ist durch seine Beweglichkeit in der Richtung 30 in seiner Höhe über der Förderbandeinrichtung 12 einstellbar positionierbar und über die Querführung 32 in der Richtung 34 in seiner Querposition über der Förderbandeinrichtung 12 feststellbar positionierbar.

Bei einer Ausführungsform ist es vorgesehen, dass der Etikettierkopf an einem Schwenklager 38 schwenkbar um eine Schwenkachse 40 an der Querführung 32 gelagert ist. Über diese Beweglichkeit des Etikettierkopfs 26 lässt sich einstellen, mit welcher Orientierung ein Etikett an einem Gegenstand ablegbar ist. Beispielsweise lässt sich ein Etikett in einer ersten Orientierung ablegen oder in einer zweiten Orientierung, welche in einem Winkel von 90° zur ersten Orientierung liegt. Es kann auch vorgesehen sein, dass der maximale Schwenkwinkelbereich bei 180° oder 270° liegt.

Die Etikettiereinrichtung 20 umfasst beispielsweise einen rotierenden Etikettierer oder einen Blas-Etikettierer. Sie kann auch einen Stempel-Etikettierer umfassen, wie er beispielsweise in der WO 2004/043786 A1 beschrieben ist.

An dem Gestell 22 ist beabstandet zu der Förderbandeinrichtung 12 eine Lichtschrankeneinrichtung 42 angeordnet, welche beispielsweise zwei beabstandete Lichtschranken 44a, 44b (mit entsprechendem Sender und Reflektor) umfasst. Die Lichtschranke 44a dient beispielsweise dazu zu überwachen, ob überhaupt Gegenstände angeliefert werden. Die Lichtschranke 44b dient beispielsweise dazu zu überwachen, ob Gegenstände auf einer Wägeeinrichtung, welche unten stehend noch näher erläutert wird, positioniert sind.

Das Charakterisierungssystem umfasst eine Steuerungseinrichtung 46, über welche das Charakterisierungssystem 10 steuerbar ist. Der Steuerungseinrichtung 46 ist ein Terminal 48 zugeordnet, an welchem der Systemstatus ablesbar ist. Das Terminal 48 oder ein getrenntes Terminal dient auch dazu, der Steuerungseinrichtung 46 Parameter bereitzustellen.

Der (mindestens einen) Charakterisierungseinrichtung 16 müssen die Gegenstände in einer bestimmten Position zugeführt werden, so dass mit einer großen Durchsatzrate die Gegenstände charakterisierbar sind. Sie müssen gewissermaßen "zentriert" durchgeführt werden. Dadurch lassen sich beispielsweise Etiketten an den Gegenständen mit hoher Rate ablegen, wobei eine Bewegung des Etikettierkopfs 26 bei der Etikettenablage nicht notwendig ist.

Die Zentrierung zur definierten Positionierung für die mindestens eine Charakterisierungseinrichtung 16 ist abhängig von der Größe eines Gegenstands.

Es ist vorgesehen, dass die Förderbandeinrichtung 12 mehrere Bereiche aufweist, welche getrennte Förderbandeinheiten umfassen. Bei dem gezeigten Ausführungsbeispiel ist ein Zuführungsbereich 50 mit einer Förderbandeinheit 52 vorhanden. Auf diesen Zuführungsbereich 50 folgt ein Vereinzelungsbereich 54 mit einer Förderbandeinheit 56. Der Vereinzelungsbereich 54 dient zur Vereinzelung von Gegenständen.

Auf den Vereinzelungsbereich 54 folgt in der Transportrichtung 14 ein Wägebereich 58 mit einer Förderbandeinheit 60. Auf den Wägebereich 58 folgt in Transportrichtung 14 ein Etikettierbereich 62 mit einer Förderbandeinheit 64.

Die Förderbandeinheiten 52, 56, 60, 64 sind grundsätzlich unabhängig voneinander, wobei eine synchronisierte Winkelpositionierung über die Steuerungseinrichtung 46 möglich ist, wie unten noch nachstehend erläutert. Gegenstände werden von der Förderbandeinheit 52 auf die Förderbandeinheit 56 übergeben, von der Förderbandeinheit 56 zu der Förderbandeinheit 60 übergeben und von dieser zu der Förderbandeinheit 64 übergeben. An der Förderbandeinheit 64 erfolgt die Etikettierung der Gegenstände.

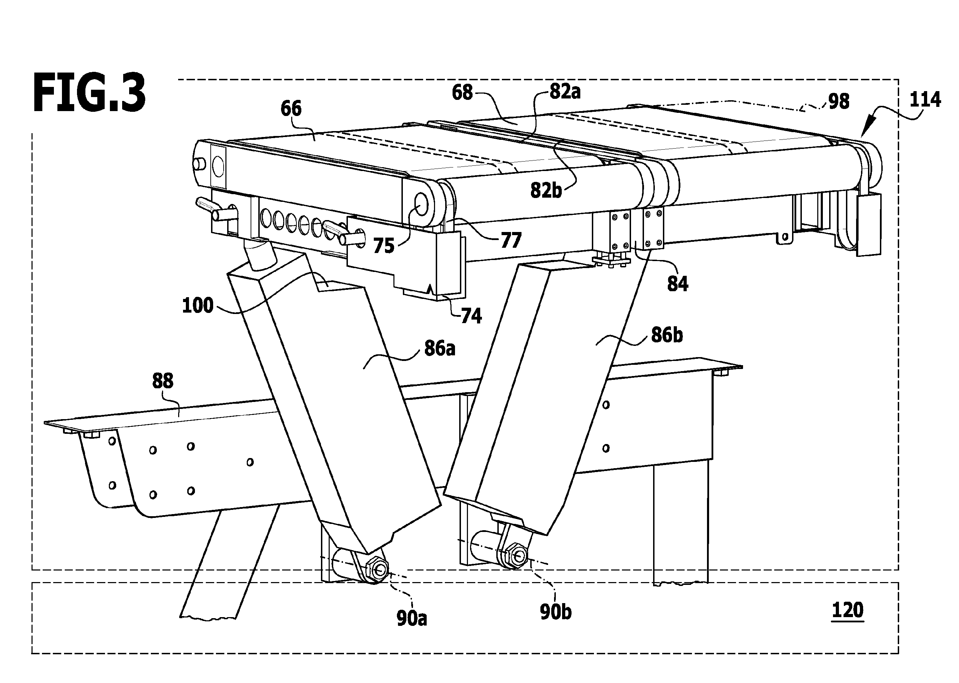

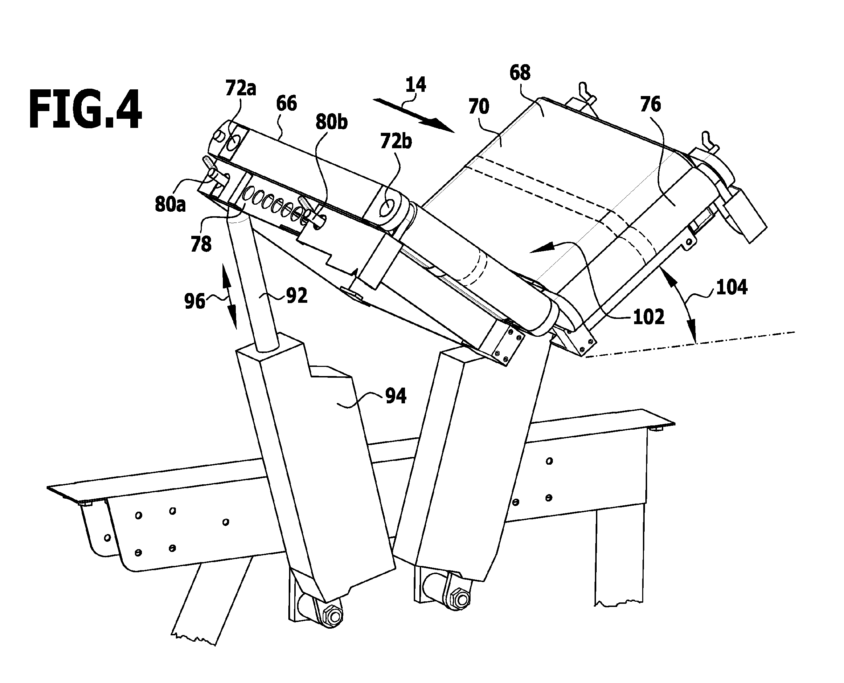

Die jeweiligen Förderbandeinheiten 52, 56, 60, 64 umfassen jeweils einen ersten Förderbandabschnitt 66 und einen zweiten Förderbandabschnitt 68 (Figuren 3 und 4). Der erste Förderbandabschnitt 66 und der zweite Förderbandabschnitt 68 liegen parallel ausgerichtet nebeneinander; sie folgen in einer Querrichtung zur Transportrichtung 14 aufeinander und sind jeweils parallel zur Transportrichtung 14 ausgerichtet. Der erste Förderbandabschnitt 66 und der zweite Förderbandabschnitt 68 weisen jeweils ein Förderband 70 auf, welches endlos an Rollen 72a, 72b geführt ist. (Es können auch noch weitere Rollen vorgesehen sein.) Eine der Rollen 72a, 72b ist angetrieben. Ihr ist hierzu ein entsprechender Antrieb 74 (Figur 3) zugeordnet. Der Antrieb 74 ist insbesondere als Elektromotor ausgebildet. Der Antrieb 74 sitzt dabei vorzugsweise stirnseitig an dem jeweiligen Förderbandabschnitt 66 bzw. 68 und treibt eine Antriebsrolle 75 mittels eines Riemens 77 an.

Zu mindestens einem Ende hin weisen der erste Förderbandabschnitt 66 und der zweite Förderbandabschnitt 68 jeweils eine drehbar gelagerte Rolle 76 auf, welche dem Anschluss an eine benachbarte Förderbandeinheit dient und welche zur Überbrückung des Abstands zu dieser benachbarten Förderbandeinheit dient.

Die Rollen 72a, 72b sind an einem Untergestell 78 gehalten. Das jeweilige Förderband 70 ist an den Rollen 72a, 72b über eine Klauenkupplung (in den Figuren 3 und 4 nicht gezeigt) fixiert. Die Klauenkupplung ist über entsprechende Schwenkhebel 80a, 80b lösbar. Dadurch lässt sich ein schneller Bandwechsel durchführen.

Der erste Förderbandabschnitt 66 weist eine Seite 82a auf, welche dem zweiten Förderbandabschnitt 68 zugewandt ist. Entsprechend weist der zweite Förderbandabschnitt 68 eine Seite 82b auf, welche dem ersten Förderbandabschnitt 66 zugewandt ist. Die beiden Seiten 82a und 82b sind parallel zur Transportrichtung 14 orientiert.

Der erste Förderbandabschnitt 66 und der zweite Förderbandabschnitt 68 stützen sich gegenseitig über eine Scharniereinrichtung 84 aneinander ab. Die Scharniereinrichtung 84 ist an dem jeweiligen Untergestell 78 des ersten Förderbandabschnitts 66 und des zweiten Förderbandabschnitts 68 angeordnet.

Der erste Förderbandabschnitt 66 ist an dem Gestell 22 über (mindestens) einen Stellzylinder 86a abgestützt. Entsprechend ist der zweite Förderbandabschnitt 68 über (mindestens) einen Stellzylinder 86b abgestützt. Die Anzahl der Stellzylinder pro Förderbandabschnitt ist abhängig von der Länge des entsprechenden Förderbandabschnitts in der Transportrichtung 14. Bei kürzeren Förderbandabschnitten genügt ein einziger Stellzylinder 86a pro Förderbandabschnitt. Bei längeren Förderbandabschnitten sind mehrere Stellzylinder vorgesehen.

Die Stellzylinder 86a, 86b sind an einem Querbalken 88 des Gestells 22 um eine jeweilige Schwenkachse 90a, 90b schwenkbar angelenkt. Die Schwenkachsen 90a, 90b sind parallel zueinander und parallel zur Transportrichtung 14 orientiert.

Der erste Stellzylinder 86a ist an dem Untergestell 78 des ersten Förderbandabschnitts 66 ebenfalls schwenkbar angelenkt mit einer Schwenkachse parallel zu der Schwenkachse 90a. Entsprechend ist der Stellzylinder 86b schwenkbar an dem Untergestell 78 des zweiten Förderbandabschnitts 68 schwenkbar angelenkt. Die Anlenkung erfolgt dabei jeweils über eine Spindel 92, die bezüglich eines Zylindergehäuses 94 in einer Richtung 96 verschieblich ist. Die Anlenkung an den Querbalken erfolgt über das Zylindergehäuse 94.

Durch das Herausfahren bzw. Hereinfahren der Spindel 92 an dem Zylindergehäuse 94 ist die jeweilige Winkelstellung des ersten Förderbandabschnitts 66 und des zweiten Förderbandabschnitts 68 zu einer Horizontalebene 98 (Figur 3) einstellbar. In einer Ausgangsposition, welche dadurch definiert ist, dass eine Oberfläche der Förderbänder 70 des ersten Förderbandabschnitts 66 und des zweiten Förderbandabschnitts 68 in einer Horizontalebene liegen (Figur 3), sind der erste Förderbandabschnitt 66 und der zweite Förderbandabschnitt 68 bezüglich ihres Förderbands 70 fluchtend in einer Ebene ausgerichtet. Die Spindel 92 ist so weit in das Zylindergehäuse 94 eingefahren, dass das entsprechende Untergestell 78 an einem Anlagebereich 100 des Zylindergehäuses 94 aufliegt. Dieser Anlagebereich 100 ist beispielsweise durch eine Ausnehmung an einer Gehäusestirnseite des Zylindergehäuses 94 gebildet.

Durch Herausfahren der Spindel 92 kann die Neigung des ersten Förderbandabschnitts 66 und des zweiten Förderbandabschnitts 68 bezogen auf die Horizontalebene verstellt werden. Es ergibt sich dadurch eine V-förmige oder rinnenförmige Förderbahn 102 (Figur 4). Durch angepasste Einstellung der Winkelpositionen des ersten Förderbandabschnitts 66 und des zweiten Förderbandabschnitts 68 bezogen auf die Horizontalebene 98 lässt sich eine definierte Transportposition eines Gegenstands an der Förderbandeinrichtung 12 erhalten. Diese definierte Positionsführung ist dabei bezüglich einer Querrichtung zu der Transportrichtung 14 festgelegt. Durch Anpassung des entsprechenden Neigungswinkels 104 an die entsprechenden Gegenstände lassen sich Gegenstände unterschiedlicher Größe "zentriert" führen und der Wägeeinrichtung 18 und der Etikettiereinrichtung 20 in einer definierten Querposition bezogen auf die Transportrichtung 14 zuführen. Dadurch lassen sich die zugeführten Gegenstände schnell charakterisieren und insbesondere mit hoher Etikettierrate etikettieren.

Die Gesamtheit der Stellzylinder, welche an die Förderbandeinrichtung 12 gekoppelt sind, bildet eine Antriebseinrichtung 106. Diese Antriebseinrichtung 106 ist an die Steuerungseinrichtung 46 gekoppelt, wobei die Steuerungseinrichtung 46 entsprechende Steuerungssignale an die Antriebseinrichtung 106 und insbesondere an die Stellzylinder der Antriebseinrichtung 106 sendet.

Die Stellzylinder 86a, 86b bilden jeweils eine Antriebsuntereinheit der Antriebseinrichtung 106. Die Stellzylinder für jeden Bereich (Zuführungsbereich 50, Vereinzelungsbereich 54, Wägebereich 58, Etikettierbereich 62) bilden jeweilige Antriebsuntereinheiten der Antriebseinrichtung 106.

Die einzelnen Stellzylinder 86a, 86b können dabei elektromotorisch betätigt sein oder pneumatisch oder hydraulisch.

Beispielsweise ist eine elektromotorische Betätigung (insbesondere jeweils über einen Elektromotor, welcher in dem Zylindergehäuse 94 angeordnet ist) vorgesehen, wenn eine stufenlose Einstellung des Neigungswinkels 104 ermöglicht sein soll.

Bei einer pneumatischen Betätigung sind insbesondere diskrete Winkelpositionen vorgesehen; beispielsweise sind drei unterschiedliche diskrete Winkelpositionen vorgesehen. Pneumatische Stellzylinder sind beispielsweise dann vorteilhaft, wenn das Charakterisierungssystem 10 bereits eine pneumatische Einrichtung wie beispielsweise einen pneumatisch angesteuerten Blas-Etikettierer umfasst.

Der Steuerungseinrichtung 46 ist eine Produktdatenbank 108 für zu charakterisierende Gegenstände 110 zugeordnet. In der Produktdatenbank 108 sind Geometriedaten von Gegenständen 110 gespeichert, auf deren Grundlage der Neigungswinkel 104 einstellbar ist, das heißt die Winkelposition des jeweiligen ersten Förderbandabschnitts 66 und des zweiten Förderbandabschnitts 68 zur Horizontalebene 98 einstellbar ist. Die Geometriedaten wiederum charakterisieren eine Klasse von Gegenständen. Es ist nicht notwendig, dass die Geometriedaten jedes einzelnen Gegenstands gespeichert sind, sondern für eine Kategorie von Gegenständen gespeichert sind. (Es ist üblicherweise nicht vorgesehen, dass der Neigungswinkel 104 an individuelle Gegenstände angepasst wird; es ist im Wesentlichen nur eine Anpassung an eine bestimmte Kategorie von Gegenständen vorgesehen. Ferner wird der Neigungswinkel 104 während des Betriebs des Charakterisierungssystems 10 nicht verstellt, sondern die Winkelposition des jeweiligen ersten Förderbandabschnitts 66 und des zweiten Förderbandabschnitts 68 ist im Betrieb fest eingestellt.) Bei einem Kategoriewechsel lassen sich die notwendigen Einstellungen aufgrund der automatischen Ansteuerbarkeit schnell erreichen, so dass die Stillstandszeiten minimierbar sind.

Die Produktdatenbank 108 kann auch noch weitere Daten der Gegenstände 110 enthalten. Beispielsweise ist in der Produktdatenbank 108 für eine bestimmte Kategorie von Gegenständen der Preis pro Gewichtseinheit gespeichert. Nach Wägung von Gegenständen in dem Wägebereich 58 lassen sich dann Etiketten auf den Gegenständen 110 ablegen, die das Gewicht und den dem Gewicht zugeordneten Preis abgedruckt haben. Die Etikettiereinrichtung 20 umfasst dazu einen Drucker.

Es kann alternativ oder zusätzlich vorgesehen sein, dass die entsprechenden Geometriedaten zur Einstellung der Winkelposition des ersten Förderbandabschnitts 66 und des zweiten Förderbandabschnitts 68 durch eine Sensoreinrichtung 112 ermittelt werden. Diese Sensoreinrichtung ist dann so angeordnet, dass eine Einstellung des Neigungswinkels 104 nach der Gegenstandsdetektion noch möglich ist. Beispielsweise erfolgt die Gegenstandsdetektion zu einem bestimmten Zeitpunkt für eine Klasse von Gegenständen 110, es wird dann der entsprechende Neigungswinkel 104 eingestellt und im Betrieb und insbesondere Etikettierbetrieb des Charakterisierungssystems 10 erfolgt keine weitere Gegenstandsdetektion bezüglich Geometriedaten.

Die Steuerungseinrichtung 46 steuert, wie in Figur 1 schematisch gezeigt, die Antriebseinrichtung 106 aufgrund der Geometriedaten der Gegenstände 110 an. Es werden dabei die jeweiligen Stellzylinder 86a, 86b des ersten Förderbandabschnitts 66 bzw. des zweiten Förderbandabschnitts 68 automatisch angesteuert.

Die Ansteuerung erfolgt synchron, um eine symmetrische Neigungswinkeleinstellung zu ermöglichen.

Wenn weitere Stellzylinder für den entsprechenden Förderbandabschnitt vorgesehen sind, dann werden diese ebenfalls angesteuert.

Wenn die Förderbandeinrichtung 12 mehrere Bereiche mit jeweiligen Förderbandabschnitten 66, 68 umfasst (wie beispielsweise den Zuführungsbereich 50, den Vereinzelungsbereich 54, den Wägebereich 58 und den Etikettierbereich 62), dann werden die entsprechenden Förderbandeinheiten 52, 56, 60 und 64 ebenfalls synchron eingestellt, um über die Förderbandeinrichtung 12 eine gleichmäßige Neigungswinkeleinstellung zu erhalten und damit eine rinnenförmige Förderbahn 102 über die gesamte Förderbandeinrichtung 12 zu erhalten.

Die Einstellung der Winkelposition des jeweiligen ersten Förderbandabschnitts 66 und des zweiten Förderbandabschnitts 68 erfolgt ausgehend von einer Referenzposition 114 (Figur 3), welche eine Horizontalposition ist; in der Referenzposition sind die Förderbänder 70 des ersten Förderbandabschnitts 66 und des zweiten Förderbandabschnitts 68 fluchtend in einer Horizontalebene ausgerichtet.

Zur Einstellung eines definierten Neigungswinkels 104 werden der jeweilige erste Förderbandabschnitt und der zweite Förderbandabschnitt 68 zunächst in die Referenzposition 114 gefahren.

Von dort ausgehend erfolgt dann eine Impulshochzählung (wobei die Steuerungseinrichtung 46 die entsprechende Ansteuerung durchführt), bis der zu erreichende Neigungswinkel eingestellt ist.

Jedem Förderbandabschnitt 66 bzw. 68 und insbesondere jedem Stellzylinder 86a, 86b ist dabei ein Positionsgeber 116 zugeordnet. Beispielsweise handelt es sich bei einem solchen Positionsgeber 116 um einen Reed-Kontaktsensor, welcher die entsprechende Stellzylinderposition ermittelt.

Bei einem Ausführungsbeispiel ist es vorgesehen, dass zwölf Zählimpulse der Steuerungseinrichtung 46 einem Winkelbereich von 1° entsprechen.

Beispielsweise beträgt der maximale Neigungswinkel 104 ca. 45°.

Die Spindel 92, welche aus dem Zylindergehäuse 94 linear ausfahrbar ist, weist beispielsweise einen Gesamthub von 130 mm auf. Dieser Gesamthub entspricht beispielsweise 520 Impulsen.

Es kann dabei eine Überwachungseinrichtung 118 vorgesehen sein, welche insbesondere in die Steuerungseinrichtung 46 integriert ist. Diese Überwachungseinrichtung 118 überwacht, wenn beispielsweise mehrere Stellzylinder einem einzigen Förderbandabschnitt zugeordnet sind, ob keine zu große Impulsabweichung zwischen unterschiedlichen Stellzylindern vorliegt. Wenn beispielsweise eine zu große Pulsabweichung detektiert wird, dann wird die Verstellung angehalten.

Die Steuerungseinrichtung 46 ist auch an die Etikettiereinrichtung 20 gekoppelt, um die Position des Etikettierkopfs 26 (Linearposition in der Richtung 30 und in der Richtung 34) an die Neigungsstellung des jeweiligen ersten Förderbandabschnitts 66 und des zweiten Förderbandabschnitts 68 anzupassen.

Die Förderbandeinheit 52 des Zuführungsbereichs 50 weist einen ersten Förderbandabschnitt 130 und einen zweiten Förderbandabschnitt 132 auf. An dem ersten Förderbandabschnitt 130 und dem zweiten Förderbandabschnitt 132 ist jeweils ein Ausrichtelement 134 angeordnet (Figur 2). Das entsprechende Ausrichtelement 134 dient zur Ausrichtung von Tabletts (Trays), die durch das Charakterisierungssystem 10 geführt werden. Wenn Gegenstände an Tabletts zu charakterisieren sind, dann sind die Förderbandabschnitte der Förderbandeinrichtung 12 üblicherweise in der Horizontalposition, das heißt nicht in V-Stellung. Die Ausrichtelemente 134 im Zuführungsbereich 50 sorgen dafür, dass die Tabletts zentriert auf der Förderbandeinrichtung 12 geführt werden und insbesondere der Wägeeinrichtung 18 und der Etikettiereinrichtung 20 zentriert zugeführt werden.

Die Ausrichtelemente 134 weisen dazu eine Abschrägung 136 auf, welche für die Ausrichtung und definierte Positionierung auf der Förderbandeinrichtung 12 sorgt.

Die Ausrichtelemente 134 sind insbesondere als Schieber ausgebildet, wobei die Positionen der Ausrichtelemente 134 in einer Richtung quer und insbesondere senkrecht zur Transportrichtung 14 einstellbar ist. Dadurch ist eine Anpassung an unterschiedliche Tablettgrößen möglich.

Die Einstellung der Ausrichtelemente 134 kann manuell erfolgen oder sie kann, wenn ein entsprechender Antrieb vorgesehen ist, beispielsweise motorisch erfolgen. Es ist dabei eine Steuerung über die Steuerungseinrichtung 46 möglich. Beispielsweise sind Tablettgrößen in der Produktdatenbank 108 enthalten.

### Das erfindungsgemäße Charakterisierungssystem 10 funktioniert wie folgt:

Abhängig von der Produktklasse an Gegenständen 110, die zu charakterisieren sind, wird der Neigungswinkel 104 des ersten Förderbandabschnitts 66 und des zweiten Förderbandabschnitts 68 eingestellt. Wenn das Charakterisierungssystem 10 mehrere Bereiche umfasst, werden die Neigungswinkel in den unterschiedlichen Bereichen gleich eingestellt.

Die notwendigen Einstellungsdaten werden aus der Produktdatenbank 108 entnommen bzw. wurden zuvor durch die Sensoreinrichtung 112 ermittelt.

Die Einstellung der definierten Winkelposition des ersten Förderbandabschnitts 66 und des zweiten Förderbandabschnitts 68 erfolgt insbesondere automatisch. Die Steuerungseinrichtung 46 steuert die Antriebseinrichtung 106 entsprechend an. Die Einstellung erfolgt ausgehend von der Referenzposition 114. Wenn sich der erste Förderbandabschnitt und der zweite Förderbandabschnitt nicht in der Referenzposition 114 befinden, wird diese zunächst hergestellt.

Durch den Anlagebereich 100 der Stellzylinder 86a, 86b ist die Referenzposition 114 auch "per Hardware" definiert.

Die Einstellung des definierten Neigungswinkels 104 erfolgt durch Ausfahren der Spindel 92 aus dem jeweiligen Zylindergehäuse 94. Die entsprechenden Steuersignale werden von der Steuerungseinrichtung 46 geliefert. Diese liefert insbesondere Zählimpulse, deren Anzahl dem einzustellenden Neigungswinkel 104 entspricht. Über die jeweiligen Positionsgeber 116 wird die Neigungswinkelverfahrung überwacht.

Es werden dabei alle Stellzylinder der Antriebseinrichtung 106 synchron angesteuert, um eine gleichmäßige Winkeleinstellung zu ermöglichen. Falls zwischen Stellzylindern, die dem gleichen Förderbandabschnitt zugeordnet sind, eine zu große Impulsabweichung (bezüglich der Anzahl) detektiert wird, wird die weitere Verstellung gestoppt und zurück in die Referenzposition 114 gefahren und/oder ein Fehler am Terminal 48 angezeigt. Ein Fehler deutet beispielsweise auf einen defekten Stellzylinder hin.

Der Neigungswinkel 104 ist abhängig von der Produktgröße. Für kleinere Produkte wird der Neigungswinkel 104 bezogen auf die Horizontalebene 98 größer eingestellt; für größere Produkte wird er kleiner eingestellt.

Nach der Einstellung der definierten Winkelposition des ersten Förderbandabschnitts 66 und des zweiten Förderbandabschnitts 68 (jeweils für den entsprechenden Bereich) wird gegebenenfalls der Etikettierkopf 26 in die entsprechende "Bearbeitungsposition" gefahren. Das Charakterisierungssystem ist dann betriebsbereit.

Im Betrieb werden die entsprechenden Gegenstände 110 zugeführt. Über den Zuführungsbereich 50 werden sie in das Charakterisierungssystem eingekoppelt. In dem Vereinzelungsbereich 54 erfolgt eine Vereinzelung, um beabstandete Gegenstände der Etikettiereinrichtung 20 zuführen zu können. In dem Wägebereich 58 erfolgt ein Wägevorgang an individuellen Gegenständen, um das Gewicht eines einzelnen Gegenstands 110 zu ermitteln.

Die Förderbandeinheit 60 des Wägebereichs 58 ist dabei auf einer Wägezelle positioniert. In Figur 3 ist die Wägezelle mit dem Bezugszeichen 120 angedeutet. Insbesondere ist auch der Querbalken 88, an dem die jeweiligen Stellzylinder für den Wägebereich 58 angelenkt sind, auf der Wägezelle 120 positioniert.

Die ermittelten Gewichtsdaten werden an die Steuerungseinrichtung 46 übertragen. Diese steuert die Etikettiereinrichtung 20 an, an welcher ein entsprechendes Etikett gedruckt wird. Das Etikett enthält beispielsweise die Gewichtsdaten des gerade gewogenen Gegenstands und den entsprechenden Preis.

In dem Etikettierbereich 62 erfolgt die Etikettierung des Gegenstands, das heißt das Etikett wird an ihm abgelegt. Insbesondere werden selbstklebende Etiketten abgelegt.

Durch die Einstellung des Neigungswinkels 104 angepasst an die jeweilige Kategorie der Gegenstände 110 ist dafür gesorgt, dass die Gegenstände 110 der Wägeeinrichtung 18 und der Etikettiereinrichtung 20 in definierter Position "zentriert" zugeführt werden, so dass eine sichere und schnelle Wägung und Etikettenablage möglich ist. Es lassen sich dadurch hohe Etikettierraten erreichen.

Durch die automatische Einstellbarkeit der an die jeweilige Gegenstandskategorie angepassten Neigungswinkel 104 lässt sich das Charakterisierungssystem 10 auf einfache Weise bedienen.

## Patentansprüche

1. Charakterisierungssystem für Gegenstände (110), umfassend mindestens eine Charakterisierungseinrichtung (16) für die Gegenstände (110), eine Förderbandeinrichtung (12) zur Zuführung von Gegenständen zu der mindestens einen Charakterisierungseinrichtung (16), welche mindestens einen Bereich (50; 54; 58; 62) mit einem ersten Förderbandabschnitt (66) und mit einem zweiten Förderbandabschnitt (68) umfasst, wobei der erste Förderbandabschnitt (66) und der zweite Förderbandabschnitt (68) parallel nebeneinander liegen und zur Bereitstellung einer rinnenförmigen Förderbahn (102) mit V-Stellung des ersten Förderbandabschnitts (66) und des zweiten Förderbandabschnitts (68) in einem Neigungswinkel (104) zu einer Horizontalebene (98) positionierbar sind, und eine Antriebseinrichtung (106) für den ersten Förderbandabschnitt (66) und den zweiten Förderbandabschnitt (68) zur Einstellung von definierten Winkelpositionen.

2. Charakterisierungssystem nach Anspruch 1, **gekennzeichnet durch** eine Steuerungseinrichtung (46), **durch** welche die Antriebseinrichtung (106) in Abhängigkeit von Produktdaten der Gegenstände (110) zur definierten Einstellung der Winkelpositionen ansteuerbar ist.

3. Charakterisierungssystem nach Anspruch 2, **dadurch gekennzeichnet, dass** die Produktdaten, auf deren Grundlage die Winkelpositionen eingestellt werden, Geometriedaten sind.

4. Charakterisierungssystem nach Anspruch 2 oder 3, **gekennzeichnet durch** eine Sensoreinrichtung (112) zur Ermittlung der Produktdaten, auf deren Grundlage die Winkelpositionen eingestellt werden.

5. Charakterisierungssystem nach einem der vorangehenden Ansprüche, **gekennzeichnet durch** eine Produktdatenbank (108) für Produktdaten, auf deren Grundlage die Winkelpositionen eingestellt werden.

6. Charakterisierungssystem nach einem der vorangehenden Ansprüche, **dadurch gekennzeichnet, dass** die Antriebseinrichtung (106) so ausgebildet und so angesteuert, dass definierte Winkelpositionen automatisch einstellbar sind.

7. Charakterisierungssystem nach einem der vorangehenden Ansprüche, **dadurch gekennzeichnet, dass** die Antriebseinrichtung (106) pro Förderbandabschnitt (66; 68) mindestens einen Stellzylinder (86a; 86b) aufweist.

8. Charakterisierungssystem nach Anspruch 7, **dadurch gekennzeichnet, dass** der mindestens eine Stellzylinder (86a; 86b) elektromotorisch betätigt ist.

9. Charakterisierungssystem nach Anspruch 7, **dadurch gekennzeichnet, dass** der mindestens eine Stellzylinder (86a; 86b) pneumatisch oder hydraulisch betätigt ist.

10. Charakterisierungssystem nach einem der Ansprüche 7 bis 9, **dadurch gekennzeichnet, dass** der mindestens eine Stellzylinder (86a; 86b) an dem entsprechenden Förderbandabschnitt (66; 68) und an einem Gestell (22) angelenkt ist.

11. Charakterisierungssystem nach einem der vorangehenden Ansprüche, **dadurch gekennzeichnet, dass** eine Einstellung einer definierten Winkelposition eines Förderbandabschnitts (66; 68) ausgehend von einer Referenzposition (114) erfolgt.

12. Charakterisierungssystem nach Anspruch 11, **dadurch gekennzeichnet, dass** die Referenzposition (114) eine Horizontalposition ist.

13. Charakterisierungssystem nach einem der Ansprüche 2 bis 12, **dadurch gekennzeichnet, dass** die Steuerungseinrichtung (46) durch Hochzählen von Pulsen ausgehend von einer Referenzposition (114) die Antriebseinrichtung (106) zur Einstellung einer definierten Winkelposition ansteuert.

14. Charakterisierungssystem nach Anspruch 13, **dadurch gekennzeichnet, dass** eine synchrone Ansteuerung von unterschiedlichen Antriebsuntereinheiten (86a, 86b) der Antriebseinrichtung (106) vorgesehen ist.

15. Charakterisierungssystem nach einem der vorangehenden Ansprüche, **dadurch gekennzeichnet, dass** der erste Förderbandabschnitt (66) und der zweite Förderbandabschnitt (68) sich gegeneinander abstützen und/oder an einem Gestell (22) abgestützt sind.

16. Charakterisierungssystem nach einem der vorangehenden Ansprüche, **dadurch gekennzeichnet, dass** die Antriebseinrichtung (106) so ausgebildet ist, dass Winkelpositionen stufenlos einstellbar sind.

17. Charakterisierungssystem nach einem der Ansprüche 1 bis 15, **dadurch gekennzeichnet, dass** die Antriebseinrichtung (106) so ausgebildet ist, dass diskrete Winkelpositionen einstellbar sind.

18. Charakterisierungssystem nach einem der vorangehenden Ansprüche, **dadurch gekennzeichnet, dass** ein Förderband (70) des ersten Förderbandabschnitts (66) durch einen Antrieb angetrieben ist, welcher an dem ersten Förderbandabschnitt (66) positioniert ist.

19. Charakterisierungssystem nach einem der vorangehenden Ansprüche, **dadurch gekennzeichnet, dass** ein Förderband (70) des zweiten Förderbandabschnitts (68) durch einen Antrieb angetrieben ist, welcher an dem zweiten Förderbandabschnitt (68) positioniert ist.

20. Charakterisierungssystem nach einem der vorangehenden Ansprüche, **gekennzeichnet durch** eine Wägeeinrichtung (18) als Charakterisierungseinrichtung.

21. Charakterisierungssystem nach einem der vorangehenden Ansprüche, **gekennzeichnet durch** eine Etikettiereinrichtung (20) als Charakterisierungseinrichtung.

22. Charakterisierungssystem nach Anspruch 21, **dadurch gekennzeichnet, dass** die Etikettiereinrichtung (20) relativ zu der Förderbandeinrichtung (12) beweglich ist.

23. Charakterisierungssystem nach Anspruch 22, **dadurch gekennzeichnet, dass** die Etikettiereinrichtung (20) einen Etikettierkopf (26) aufweist, welcher in mindestens einer Richtung (30; 34) quer zu einer Transportrichtung (14) der Förderbandeinrichtung (12) verschieblich ist.

24. Charakterisierungssystem nach Anspruch 22 oder 23, **dadurch gekennzeichnet, dass** die Etikettiereinrichtung (20) einen Etikettierkopf (26) aufweist, welcher um mindestens eine Schwenkachse (40) schwenkbar ist.

25. Charakterisierungssystem nach Anspruch 24, **dadurch gekennzeichnet, dass** die mindestens eine Schwenkachse (40) quer zu einer Transportrichtung (14) der Förderbandeinrichtung (12) orientiert ist.

26. Charakterisierungssystem nach Anspruch 24 oder 25, **dadurch gekennzeichnet, dass** die mindestens eine Schwenkachse (40) eine vertikale Achse ist.

27. Charakterisierungssystem nach einem der vorangehenden Ansprüche, **dadurch gekennzeichnet, dass** die Förderbandeinrichtung (12) eine Mehrzahl von Bereichen (50, 54, 58, 62) aufweist, welche jeweils einen ersten Förderbandabschnitt (66) und einen zweiten Förderbandabschnitt (68) aufweisen.

28. Charakterisierungssystem nach Anspruch 27, **dadurch gekennzeichnet, dass** die Förderbandeinrichtung (12) einen Zuführungsbereich (50) aufweist.

29. Charakterisierungssystem nach Anspruch 27 oder 28, **dadurch gekennzeichnet, dass** die Förderbandeinrichtung (12) einen Vereinzelungsbereich (54) aufweist.

30. Charakterisierungssystem nach einem der Ansprüche 27 bis 29, **dadurch gekennzeichnet, dass** die Förderbandeinrichtung (12) einen Wägebereich (58) aufweist.

31. Charakterisierungssystem nach einem der Ansprüche 27 bis 30, **dadurch gekennzeichnet, dass** die Förderbandeinrichtung (12) einen Etikettierbereich (62) aufweist.

32. Charakterisierungssystem nach einem der Ansprüche 27 bis 31, **dadurch gekennzeichnet, dass** die Winkelpositionen der ersten Förderbandabschnitte (66) und der zweiten Förderbandabschnitte (68) in den unterschiedlichen Bereichen durch eine Steuerungseinrichtung (46) synchronisierbar sind.

33. Charakterisierungssystem nach einem der vorangehenden Ansprüche, **gekennzeichnet durch** mindestens eine Sicherheitswand (24a; 24b) an der Förderbandeinrichtung (12).

34. Charakterisierungssystem nach einem der vorangehenden Ansprüche, **dadurch gekennzeichnet, dass** dem ersten Förderbandabschnitt (66) und dem zweiten Förderbandabschnitt (68) jeweils mindestens ein Positionsgeber (116) zugeordnet ist.

35. Verfahren zur Zuführung von Gegenständen zu einer Charakterisierungseinrichtung mittels einer Förderbandeinrichtung, bei welchem eine Winkeleinstellung eines ersten Förderbandabschnitts und eines zweiten Förderbandabschnitts der Förderbandeinrichtung zu einer Horizontalebene über eine Antriebseinrichtung in Abhängigkeit von Produktdaten der Gegenstände automatisch durchgeführt wird.

36. Verfahren nach Anspruch 35, **dadurch gekennzeichnet, dass** die Produktdaten Geometriedaten sind.

37. Verfahren nach Anspruch 35 oder 36, **dadurch gekennzeichnet, dass** der Winkel zur Horizontalebene größer eingestellt wird, wenn die Gegenstände kleinere geometrische Abmessungen aufweisen.

38. Verfahren nach einem der Ansprüche 35 bis 37, **dadurch gekennzeichnet, dass** die Produktdaten aus einer Produktdatenbank entnommen werden und/oder von einer Sensoreinrichtung ermittelt werden.

39. Verfahren nach einem der Ansprüche 35 bis 38, **dadurch gekennzeichnet, dass** die Einstellung einer definierten Winkelposition ausgehend von einer Referenzposition erfolgt.

40. Verfahren nach Anspruch 39, **dadurch gekennzeichnet, dass** die Referenzposition eine Horizontalposition ist.
